# EUROPEAN PATENT APPLICATION

(11) **EP 1 906 188 A2**
(43) Date of publication of application: **02.04.2008**
(21) Application number: 07017519.5
(22) Date of filing: 06.09.2007
(51) Int. Cl.: G01N 35/10

(54) **Liquid circulating apparatus and measurement apparatus**

(30) Priority: 27.09.2006 JP 2006262050; 15.06.2007 JP 2007158609
(71) Applicant: FUJIFILM Corporation, Minato-ku Tokyo (JP)
(72) Inventor: Nogawa, Minako, Ashigarakami-gun Kanagawa (JP)
(74) Representative: Klunker . Schmitt-Nilson . Hirsch

(57) **Abstract**

Provided are a liquid circulating apparatus capable of suppressing a concentration variation of a liquid to be supplied, and a measurement apparatus having the liquid circulating apparatus. A buffer liquid circulating apparatus 71 comprises a bottle 72, a buffer tank 74, a pump 75, a supply path 76 and a return path 77. The bottle 72 and the buffer tank 74 are connected to the supply path 76 and the return path 77, and the pump 57 is connected to the return path 77. The supply path 76 and the return path 77 are constituted of a tube to become a flow path for the buffer liquid.

## Description

### BACKGROUND OF THE INVENTION

### Field of the Invention

The present invention relates to a liquid circulating apparatus for replacing a liquid in a flow path, and to a measurement apparatus having the liquid circulating apparatus.

### Description of the Related Art

Conventionally, there has been known a measurement apparatus for measuring the interactions between a ligand and an analyte by exposing the fixed ligand to a flow path and by supplying the flow path with the analyte, as disclosed in Patent No. 3,294,605. The measurement using that measurement apparatus may use a large quantity of buffer solution adjusted in a predetermined concentration.

In case the buffer solution is automatically supplied by using an access member such as a pipette, it is necessary to store the buffer solution in the container which can be accessed by the pipette. It is also necessary to keep the concentration of the buffer solution constant. If, however, the buffer solution is stored in the container having an access port, the concentration is varied by evaporations or the like.

### SUMMARY OF THE INVENTION

The present invention has been made in view of the above circumstances and provides a liquid circulating apparatus and a measurement apparatus.

A first aspect of the present invention provides a liquid circulating apparatus comprising: a liquid bottle storing a liquid and having an inside of the liquid bottle sealed; a liquid tank having an access port which can be accessed by an access member; a supply path connected to the liquid bottle and the liquid tank, that allows the liquid to flow from the liquid bottle to the liquid tank; a return path connected to the liquid bottle and the liquid tank, that allows the liquid to flow from the liquid tank to the liquid bottle; and a liquid flow pump connected to either the supply path or the return path, that causes the liquid to flow, wherein the liquid is circulated in a liquid circulating route that includes the liquid bottle, the liquid tank, the supply path and the return path.

A second aspect of the present invention provides a measurement apparatus that supplies a testing substance to a substance to be tested fixed on a measurement chip, comprising: the liquid circulating apparatus according to the first aspect of the present invention, wherein due to the access of the access member, the liquid in the liquid tank is sucked and supplied to the measurement chip.

### BRIEF DESCRIPTION OF THE DRAWINGS

Embodiments of the present invention will be described in detail based on the following figures, wherein:
Fig. 1 is a perspective view of the inside of a biosensor according to the embodiment;
Fig. 2 is a top view of the inside of the biosensor according to the embodiment;
Fig. 3 is an exploded perspective view of a measurement stick according to the embodiment;
Fig. 4 is a perspective view of the measurement stick according to the embodiment;
Fig. 5 is a perspective view showing a vertical drive mechanism of a dispensing head of the biosensor according to the embodiment;
Fig. 6 is a schematic view of the vicinity of a measurement portion of the biosensor according to the embodiment;
Fig. 7 is a schematic configuration diagram of a liquid circulating apparatus according to the embodiment;
Fig. 8 is a perspective view of a bottle cap according to the embodiment;
Fig. 9 is an exploded perspective view of the bottle cap according to the embodiment;
Fig. 10 is an exploded perspective view of a buffer tank of the biosensor according to the embodiment;
Fig. 11 is a side sectional view of the buffer tank of the biosensor according to the embodiment;
Fig. 12 is a side sectional view of a modification of the buffer tank of the biosensor according to the embodiment;
Fig. 13A is a side sectional view of another modification of the buffer tank of the biosensor according to the embodiment; and
Fig. 13B is a side sectional view of another modification of the buffer tank of the biosensor according to the embodiment.

### DETAILED DESCRIPTION OF THE INVENTION

Herebelow, an example of an exemplary embodiment of the present invention will be described in detail with reference to the drawings.

A biosensor 10 serving as a measurement apparatus according to an aspect of the present invention is a so-called surface plasmon sensor for measuring an interaction between protein Ta and sample A by using surface plasmon resonance generated on a surface of a metal film.

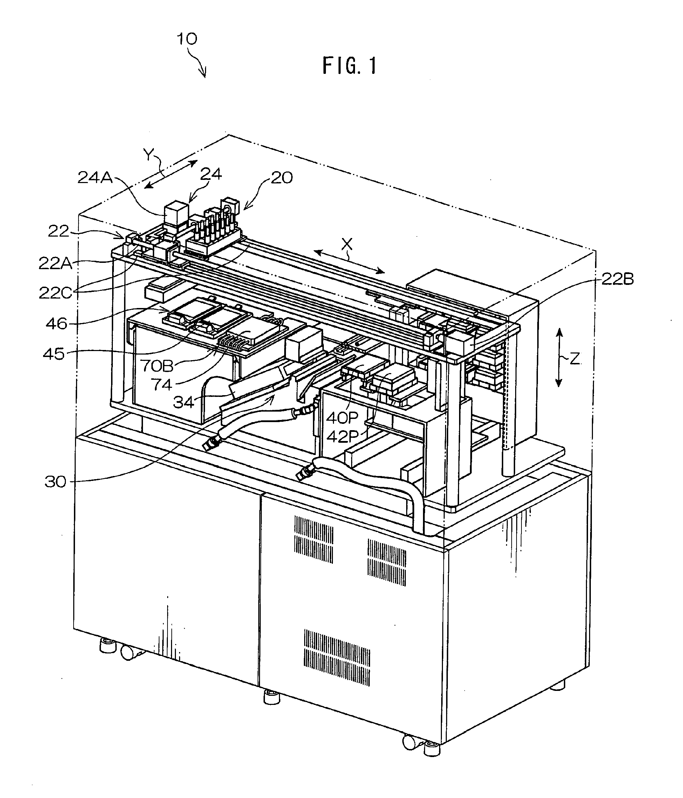

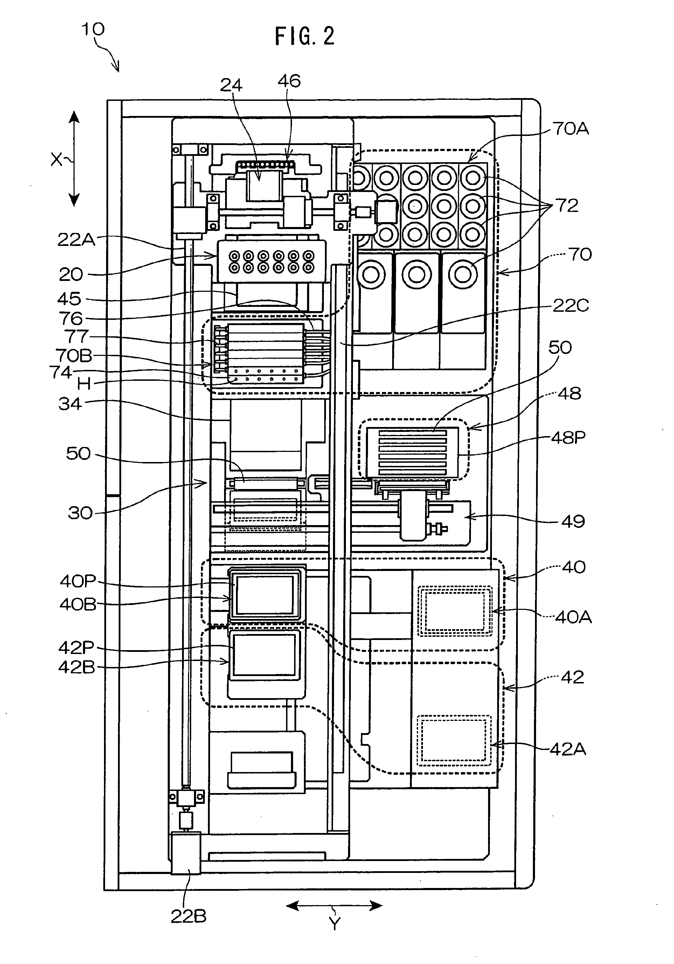

As shown in Fig. 1 and Fig. 2, the biosensor 10 includes a dispensing head 20, a measurement portion 30, a sample stock portion 40, a pipette chip stock portion 42, a buffer stock portion 70, a refrigeration portion 46 and a measurement stick stock portion 48.

On the measurement portion 30, a measurement stick 50 is set. The measurement in the biosensor 10 is performed by supplying the sample to the protein Ta fixed on the measurement stick 50 thereby to detect a signal variation.

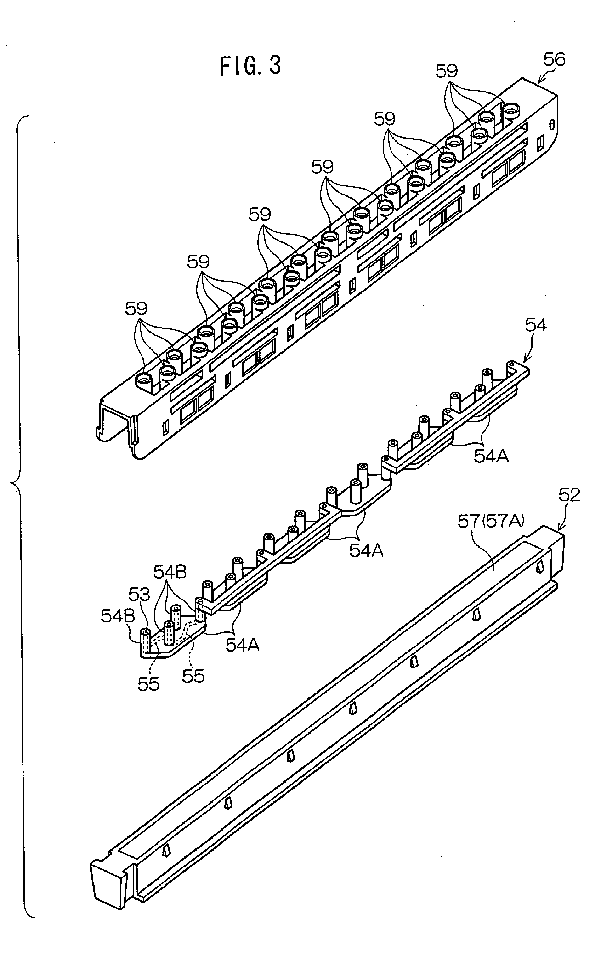

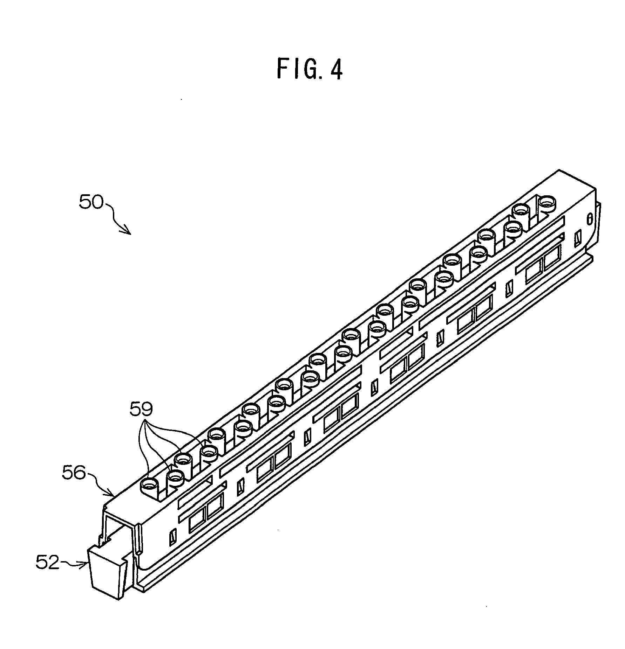

The measurement stick 50 is constituted, as shown in Fig. 3 and Fig. 4, of a dielectric block 52, a flow path member 54 and a holding member 56.

The dielectric block 52 has a large length and a flat measurement surface on its upper surface. The measurement surface is formed with a metal film 57, on which a linker layer 57A is formed. The protein Ta is fixed on the linker layer 57A.

The flow path member 54 is provided with six base members 54A. Each base member 54A is formed with two substantially S-shaped flow path grooves in its bottom surface. Each of the end portions of the flow path grooves communicating with a hollow portion of one of cylindrical members 54B. The base member 54A has a bottom surface which is brought into tight contact with the measurement surface of the dielectric block 52 thereby to form liquid flow paths 55 between the flow path grooves and the measurement surface. In each of the liquid flow paths 55, an inlet/outlet port 53 of the liquid flow path 55 is formed in an upper end surface of the cylindrical member 54B.

The holding member 56 has a large length and a U-shaped cross-section, and is integrated with the flow path member 54 being held in the U-shape. The holding member 56 is provided with receiving portions 59 at positions corresponding to the cylindrical members 54B of the flow path member 54. By the holding member 56, the flow path member 54 is attached in close contact to the dielectric block 52.

As shown in Fig. 1, the dispensing head 20 can be moved in a direction of an arrow X by a horizontal drive mechanism 22. The horizontal drive mechanism 22 is constituted of a ball screw 22A, a motor 22B and guide rails 22C. The ball screw 22A and the guide rails 22C are arranged in the X-direction. Two guide rails 22C are parallel arranged. One of the guide rails 22C is arranged below the ball screw 22A with a predetermined interval. The dispensing head 20 is moved in the X-direction along the guide rails 22C by rotation of the ball screw 22A.

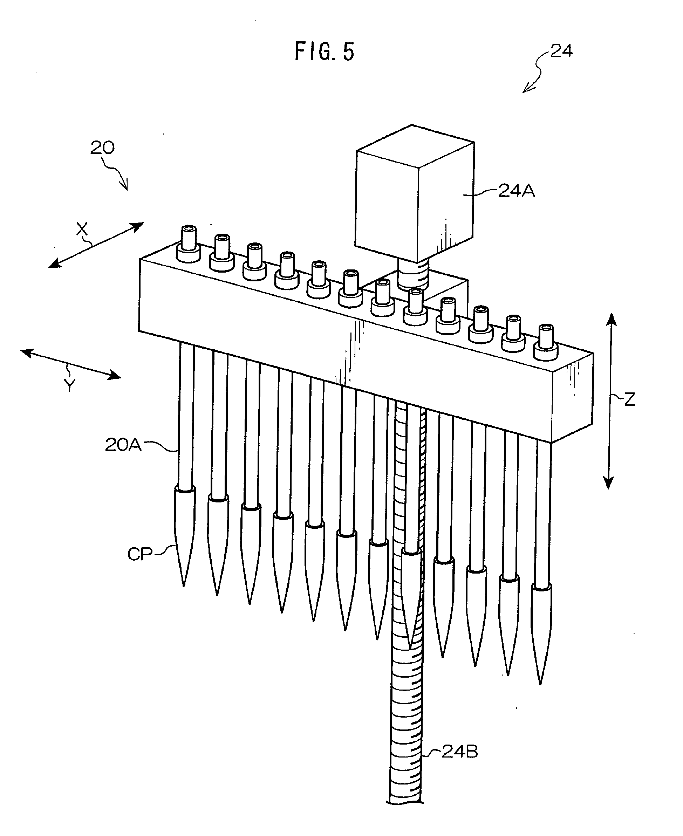

The dispensing head 20 is provided with a vertical drive mechanism 24 for moving the dispensing head 20 in a direction of an arrow Z. The vertical drive mechanism 24 is constituted, as shown in Fig. 5, to include a motor 24A and a drive shaft 24B arranged in the Z-direction thereby to move the dispensing head 20 in the Z-direction.

The dispensing head 20 is provided with twelve dispensing pipes 20A. The dispensing pipes 20A are arranged in a line along a direction of an arrow Y orthogonal to the X-direction. In measurement, the dispensing pipes 20A supply the measurement stick 50 with the sample and the buffer liquid. Two adjacent dispensing pipes 20A are paired, and each of them is used to correspond to the inlet/outlet port of one liquid flow path 55. Pipette chips CP are attached to the distal ends of the dispensing pipes 20A.

The pipette chips CP, as attached to the dispensing pipes 20A, are stocked in a pipette chip stocker 42P, as will be described hereinafter, and can be replaced, if necessary.

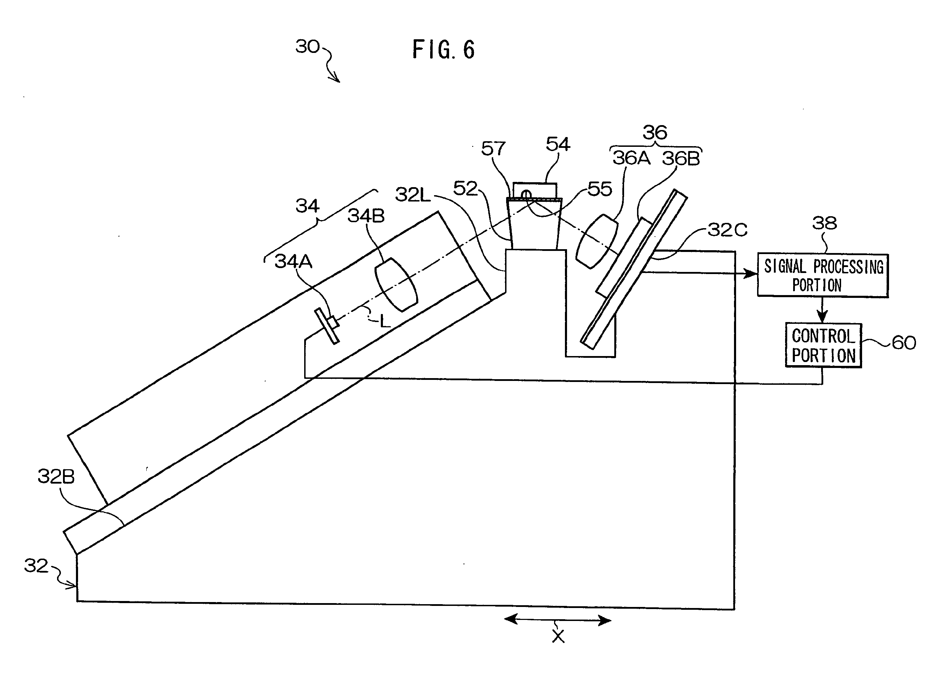

As shown in Fig. 6, the measurement portion 30 is constituted to include an optical surface plate 32, a light emitting portion 34 and a light receiving portion 36. Members other than the dielectric block 52 and the flow path member 54 of the measurement stick 50 are omitted from Fig. 6. In the optical surface plate 32, as viewed from the side, there are formed: a surface plate rail portion 32L constituted of a horizontal plane at the center of the upper part; a light emitting slated portion 32B becoming lower in a direction leading away from the surface plate rail portion 32L; and a light receiving slanted portion 32C arranged at the opposite side of the surface plate rail portion 32L to the light emitting slanted portion 32B. On the surface plate rail portion 32L, the measurement stick 50 is set along the Y-direction. On the light emitting slanted portion 32B of the optical surface plate 32, the light emitting portion 34 for emitting a light beam toward the measurement stick 50 is installed. Moreover, on the light receiving slanted portion 32C, the light receiving portion 36 is installed.

The light emitting portion 34 is provided with a light source 34A and a lens unit 34B. On the other hand, the light receiving portion 36 is provided with a lens unit 36A and a CCD 36B. The light source 34A is connected to a control portion 60, and the CCD 36B is connected to a signal processing portion 38 and the control portion 60.

The light beam is emitted from the light source 34A toward the measurement stick 50, and the reflected light, as reflected by the interface between the metal film 57 and the dielectric block 52, is received by the CCD 36B, so that the photodetection signals photoelectrically converted are outputted to the signal processing portion 38. On the basis of the photodetection signals inputted, the signal processing portion 38 performs predetermined processing operations to determine measurement data.

As shown in Fig. 2, the sample stock portion 40 is constituted of a sample stacking portion 40A and a sample setting portion 40B. In the sample stacking portion 40A, sample plates 40P for stocking different analyte solutions in the individual cells are stacked in the Z-direction and accommodated. In the sample setting portion 40B, one sample plate 40P, which is conveyed from the sample stacking portion 40A by a not-shown conveying mechanism, is set.

The pipette chip stock portion 42 is constituted of a pipette chip stacking portion 42A and a pipette chip setting portion 42B. In the pipette chip stacking portion 42A, pipette chip stockers 42P for holding a plurality of pipette chips are stacked in the Z-direction (the vertical direction) and accommodated. In the pipette chip setting portion 42B, one pipette chip stoker 42P, as conveyed from the pipette chip stacking portion 42A by the not-shown conveying mechanism, is set.

The buffer stock portion 70 is constituted of a bottle accommodation portion 70A and a buffer supply portion 70B. The bottle accommodation portion 70A accommodates a plurality of bottles 72 storing the buffer liquid. In the buffer supply portion 70B, a buffer tank 74 is set. In the buffer stock portion 70, there is constituted a buffer liquid circulating apparatus 71 for circulating the buffer liquid stored in the bottle 72, through the buffer tank 74. The buffer liquid circulating apparatus 71 will be detailed hereinafter.

Adjacent to the buffer supply portion 70B, there is arranged a correcting plate 45, adjacent to which the refrigeration portion 46 is arranged. The correcting plate 45 is a plate for adjusting the concentration of the buffer liquid, and a plurality of cells are constituted in a matrix shape. The refrigeration portion 46 is arranged with the sample to be refrigerated. The refrigeration portion 46 is set at a low temperature so that the sample is kept thereon in the low temperature state.

In the measurement stick stock portion 48, a measurement stick accommodation plate 48P is set. A plurality of measurement sticks 50 is accommodated as measurement chips in the measurement stick accommodation plate 48P. The measurement sticks 50 are conveyed by a measurement stick conveying mechanism 49 and set in the measurement portion 30.

Here is described the detail of the buffer liquid circulating apparatus 71.

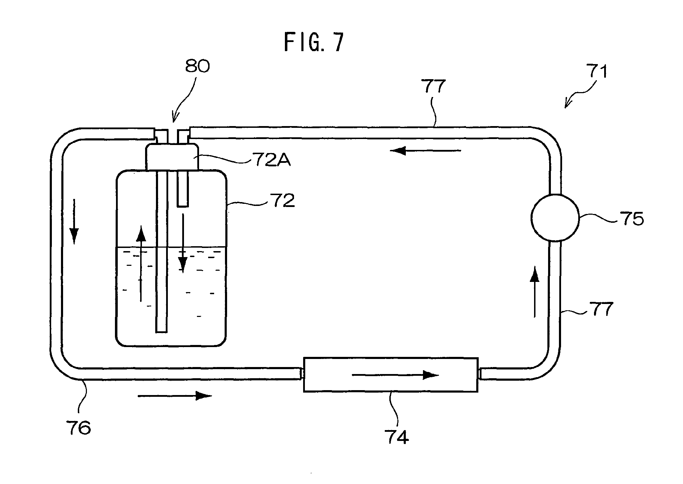

As shown in Fig. 7, the buffer liquid circulating apparatus 71 is provided with the bottle 72, the buffer tank 74, a pump 75, a supply path 76 and a return path 77. The bottle 72 and the buffer tank 74 are connected to the supply path 76 and the return path 77, and the pump 75 is connected to the return path 77. The supply path 76 and the return path 77 are constituted of a tube to become a flow path for the buffer liquid.

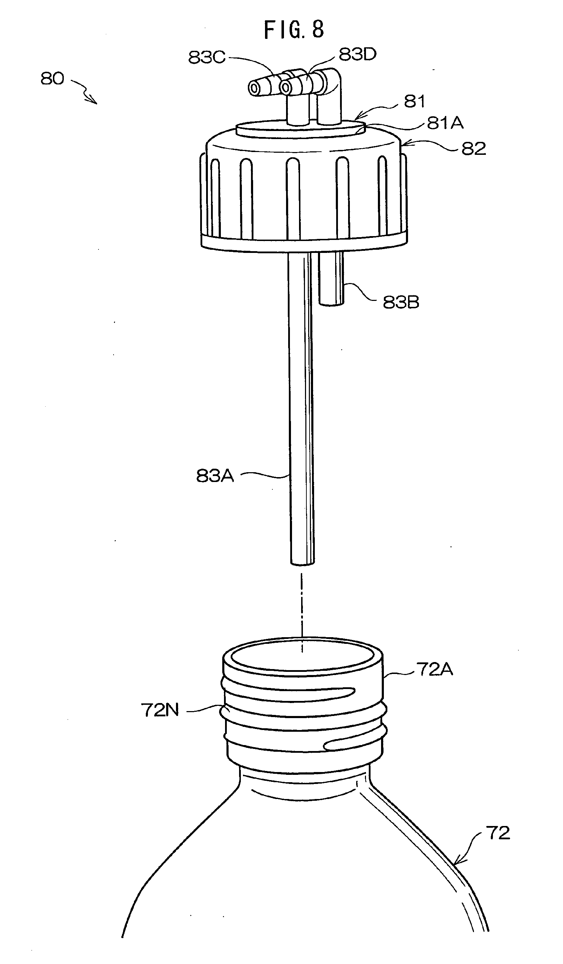

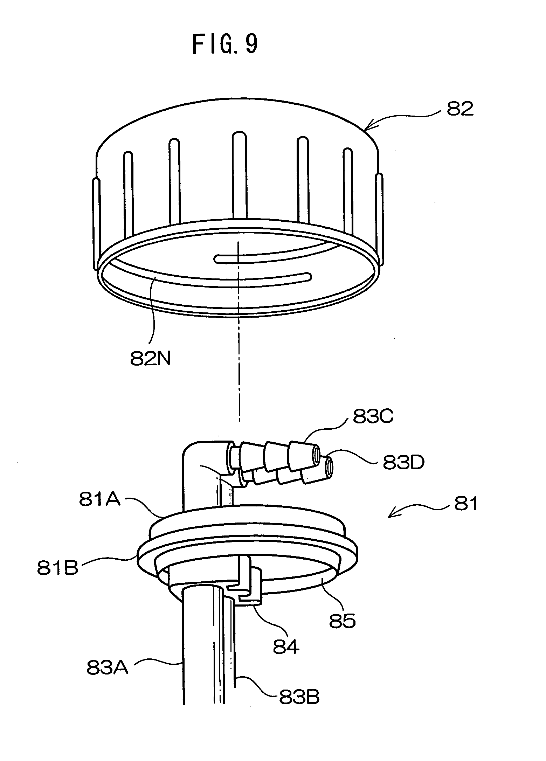

A bottle cap 80 is mounted on a bottle mouth 72A of the bottle 72. The bottle cap 80 is constituted, as shown in Fig. 8 and Fig. 9, of an inner member 81 and an outer member 82. The inner member 81 is provided with a disc-shaped main body portion 81A. Through the main body portion 81A, there are inserted a supply port nozzle 83A connected to the supply path 76, and a return port nozzle 83B connected to the return path 77. The supply port nozzle 83A and the return port nozzle 83B are inserted vertically of the disc surface of the main body portion 81 A, and are bent at a right angle on the upper side of the main body portion 81A. The distal end portions 83C and 83D, as bent at a right angle, are formed into a bamboo sprout-like shape, in which taper portions of three steps are converged toward the distal ends. This bamboo sprout-like shape ensures the sealing characteristics between the tube and the distal end portions 83C and 83D when the tube is attached. The supply port nozzle 83A has a large length to the vicinity of the bottom surface of the bottle 72, and the return port nozzle 83B is made shorter than the supply port nozzle 83A.

On the lower side of the main body portion 81A, as shown in Fig. 9, there is disposed an engagement plate 81 B, which has a diameter larger than the main body portion 81 A and than the internal diameter of the bottle mouth 72A. On the lower side of the engagement plate 81B, there are disposed a nozzle sealing member 84 for sealing the clearance from the supply port nozzle 83A and the return port nozzle 83B, and a bottle mouth sealing member 85 for sealing the clearance from the bottle mouth 72A. The bottle mouth sealing member 85 has a diameter a little smaller than the bottle mouth 72A and can be inserted into the bottle mouth 72A.

The outer member 82 is formed in an annular shape and has a thread groove 82N on its inner side, which is screwed with a thread portion 72N on the outer side of the bottle mouth 72A. The outer member 82 is formed, at its upper part, with an inner engagement portion, which has a diameter smaller than the lower part. The internal diameter of the inner engagement portion is made larger than the external diameter of the main body portion 81 A of the inner member 81 and smaller than the external diameter of the engagement plate 81B. The internal diameter of the lower part of the outer member 82 is made larger than the engagement plate 81 B of the inner member 81, so that the engagement plate 8 1 B can freely rotate in the outer member 82.

When the bottle cap 80 is mounted on the bottle mouth 72A, the supply port nozzle 83A, the return port nozzle 83B and the bottle mouth sealing member 85 of the inner member 81 are inserted into the bottle mouth 72A. The outer member 82 is put on the upper side of the inner member 81, and the thread groove 82N and the thread portion 72N are screwed together. Thereby, the engagement plate 81B is disposed between the distal end surface of the bottle mouth 72A and the inner engagement portion of the outer member 82 so that the bottle mouth 72A is sealed. The main body portion 81 A protrudes from the upper side of the outer member 82. When the bottle cap 80 is removed from the bottle mouth 72A, the thread groove 82N and the thread portion 72N are screwingly disengaged from each other. At this time, the engagement plate 81 B is able to independently rotate relative to the outer member 82, so that it does not follow the rotation of the outer member 82. This makes it possible to replace the bottle 72 easily while leaving the supply path 76 and the return path 77 connected.

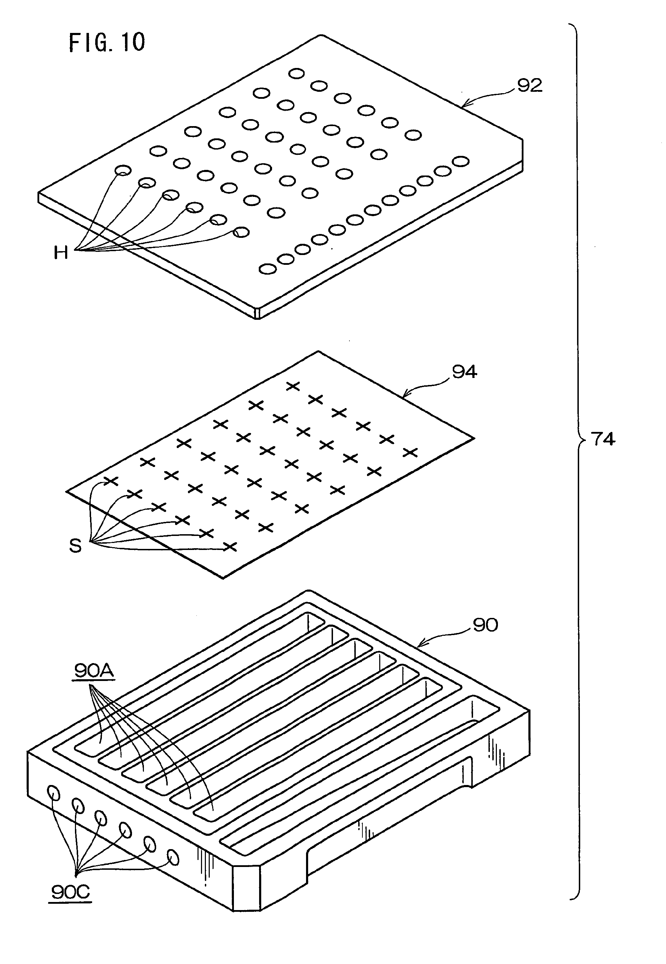

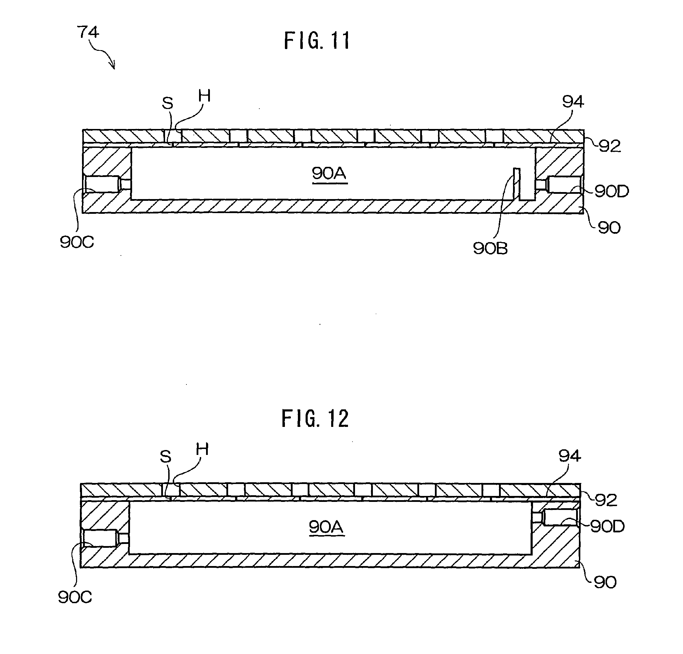

The buffer tank 74 is constituted, as shown in Fig. 10 and Fig. 11, by stacking a plate 90, a closing sheet 94 and a cover plate 92 sequentially in the recited order from the lower side. The plate 90 is separated into a plurality of streaks, in which tank portions 90A for individually storing the buffer liquid are formed. Each of the tank portions 90A is supplied with the buffer liquid from the different bottles 72. In the plate 90, connection ports 90C, to which the tube of the supply path 76 is connected, and connection ports 90D, to which the tube of the return path 77 is connected, are formed in the individual tank portions 90A to communicate individually with the tank portions 90A. A Rib 90B is formed as dam member in the tank portion 90A on the side of the connection port 90D.

The rib 90B dams up the buffer liquid supplied to the tank portion 90A so that the buffer liquid may not flow out downstream till the liquid surface reaches a level to ride over the rib 90B. Thereby, the buffer liquid is stored in a predetermined quantity in the tank portion 90A so that the buffer liquid in the tank portion 90A may not become short when it is sucked by the pipette chips CP.

The cover plate 92 is formed into a plate-like shape to cover the upper surface of the plate 90, and is provided with access ports H, into which the pipette chips CP can be inserted. The access ports H are juxtaposed by six in number individually along the tank portions 90A. The bottle 72, the supply path 76, the tank portion 90A and the return path 77 constitute a liquid circulating route.

The closing sheet 94 is formed into such a sheet-like shape as is placed between the plate 90 and the cover plate 92, and is formed with such cross-shaped slits S as can be inserted the pipette chips CP. The slits S are formed at positions corresponding to the access ports H. The closing sheet 94 is made of an elastically deformable resin or the like, and can be deformed to bend downward, when the pipette chips CP are inserted, but can restore to seal the access ports H after the pipette chips CP are pulled out.

The pipette chips CP access the buffer tank 74 from the upper side, and are inserted through the access ports H and the slits S into the tank portion 90A. The pipette chips CP thus inserted suck the buffer liquid. At this time, the inside of the tank portion 90A is decompressed by the suction of the buffer liquid, so that the air comes from the clearance of the slits S into the tank portion 90A. This air is supplied via the return path 77 to the bottle 72, so that the buffer liquid is sent from the bottle 72 to the supply path 76. In this way, the buffer liquid is circulated while the pressure in the liquid circulating route being kept constant.

The buffer liquid thus sucked by the pipette chips CP is supplied to the measurement stick 50 set in the measurement portion 30. When the pipette chips CP leave the buffer tank 74, the slits S are restored to close the access ports H. The closure of the access ports H at the slits S is such that the inside of the liquid circulating route constituted of one bottle 72, the tank portion 90A connected to the bottle 72, the supply path 76 and the return path 77 is sealed to permit the circulation of the buffer liquid with one pump 75.

The circulation of the buffer liquid in the buffer liquid circulating apparatus 71 is performed by the pump 75. The pump 75 is connected to the return path 77 thereby to flow the buffer liquid from the side of the buffer tank 74 to the side of the bottle 72. As described above, the liquid circulating route is formed to have a sealed space to a certain extent, so that the buffer liquid can be circulated by the single pump 75.

In this embodiment, the buffer liquid is circulated between the inside of the buffer tank 74 and the bottle 72 by the buffer liquid circulating apparatus 71, so that the concentration change of the buffer liquid can be reduced more than that of the case, in which the buffer liquid stays in the buffer tank 74. As a result, the precise measurement can be performed by using the buffer liquid of a desired concentration.

Here, this embodiment has been described on the example, in which the pump 75 is connected to the return path 77. However, the pump 75 may also be connected to the supply path 76.

In this embodiment, moreover, the rib 90B is formed in the tank portion 90A of the buffer tank 74 so that the buffer liquid may have a predetermined level. The rib 90B is not always necessary, and even if the rib 90B is not present, the buffer liquid can still be maintained at a predetermined level by forming the connection port 90D at the same height as the rib 90B would have had, as shown in Fig. 12.

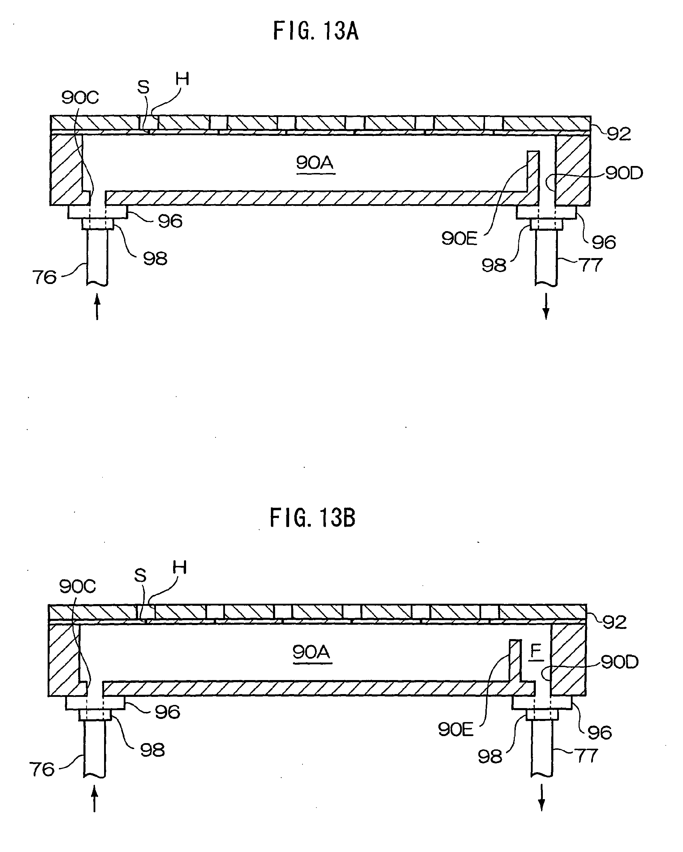

In this embodiment, moreover, the connection ports 90C and 90D are formed in the side surface of the buffer tank 74 (the plate 90), but the connection ports to communicate individually with the supply path 76 and the return path 77 may also be formed in the lower surface of the buffer tank 74, as shown in Fig. 13A and Fig. 13B. In this modification, the connection ports 90C are formed in the plate 90 on the side of the supply path 76, and the connection ports 90D are formed in the plate 90 on the side of the return path 77. Upstream of the connection port 90D, a rib 90E for keeping the level of the buffer liquid at a predetermined level is formed. The rib 90E may be constituted by extending the connection port 90D itself, as shown in Fig. 13A, or by forming open space F in an upper part of the connection port 90D, as shown in Fig. 13B. Then, connection portions 98 to the supply path 76 and the return path 77 are formed on the lower sides of the connection ports 90C and 90D, and seal blocks 96 are arranged between the connection portions 98 and the plate 90 thereby to seal the clearance from the supply path 76 and the return path 77.

According to the constitution shown in Fig. 13A and Fig. 13B, the supply path 76 and the return path 77 can be easily set by connecting them to the lower side of the buffer tank 74, even in case a sufficient space is absent around the side surface of the buffer tank 74.

Here, in this embodiment, the measurement apparatus has been described on the biosensor by way of example. However, the liquid circulating apparatus according to an aspect of the invention can also be used for another apparatus needing the liquid circulation.

The present invention provides a liquid circulating apparatus capable of suppressing the concentration variation of a liquid to be supplied, and a measurement apparatus provided with the liquid circulating apparatus.

A first aspect of the present invention provides a liquid circulating apparatus comprising: a liquid bottle storing a liquid and having an inside of the liquid bottle sealed; a liquid tank having an access port which can be accessed by an access member; a supply path connected to the liquid bottle and the liquid tank, that allows the liquid to flow from the liquid bottle to the liquid tank; a return path connected to the liquid bottle and the liquid tank, that allows the liquid to flow from the liquid tank to the liquid bottle; and a liquid flow pump connected to either the supply path or the return path, that causes the liquid to flow, wherein the liquid is circulated in a liquid circulating route that includes the liquid bottle, the liquid tank, the supply path and the return path.

According to the above-described aspect, the liquid does not stay in the liquid tank but circulates between the liquid tank and the liquid bottle so that the concentration variation of the liquid in the liquid tank can be suppressed.

According to the above-described aspect, the inside of the liquid bottle is sealed so that the liquid can be circulated in the liquid circulating route by using the single liquid flow pump.

In the above-described aspect, the liquid tank may have a closing cover that closes the access port when the access port is not accessed by the access member.

According to the above-described aspect, when the access port is not accessed by the access member, the access port of the liquid tank is closed by the closing cover, so that the liquid can be stably circulated in the liquid circulating route.

In the above-described aspect, the liquid circulating apparatus may further comprise a dam member arranged in a flow path of the liquid tank closer to a side connected to the return path than to the access port, that dams the liquid in the liquid tank.

Here, the dam member prevents the liquid in the liquid tank from flowing downstream till it reaches a predetermined level. By thus providing the dam member, the liquid level in the flow path of the liquid tank can be kept constant at substantially the same level as the height of the rib dam.

In the above-described aspect, the liquid tank may be provided with a connection port connected to the return path, and the connection port may be arranged at such a height that the liquid in the liquid tank may not flow out to the connection port until the liquid reaches a predetermined level.

By thus forming the connection port, the liquid level in the flow path of the liquid tank can be kept constant.

In the above-described aspect, the liquid bottle may have a bottle cap that seals an inside of the liquid bottle, and the bottle cap may have a supply port connected to the supply path and a return port connected to the return path, and the bottle cap is removably mounted at the liquid bottle.

By thus having the bottle cap, the liquid bottle can be easily replaced by removing the bottle cap while leaving the supply path and the return path connected.

In the above-described aspect, the closing cover may have substantially cross-shaped slits formed therein.

According to the above-described aspect, the access member can be inserted.

In the above-described aspect, the closing cover may be made of an elastically deformable resin.

According to the above-described aspect, the closing cover can be bent downward when the access members are inserted, and can restore to close the access port after the access member is pulled out.

In the above-described aspect, the liquid tank may be constituted such that a connection port connected to the supply path is formed in a lower surface of the liquid tank on a side of the supply path, and a connection port connected to the return path is formed in a lower surface of the liquid tank on a side of the return path, and the dam member may be formed to extend the connection port connected to the return path.

According to the above-described aspect, even in case a sufficient space is absent around the side surface of the liquid tank, the supply path and the return path can be easily set by connecting them to the lower side of the liquid tank.

In the above-described aspect, the liquid tank may be constituted such that a connection port connected to the supply path is formed in a lower surface of the liquid tank on a side of the supply path, and a connection port connected to the return path is formed in a lower surface of the liquid tank on a side of the return path, and the dam member may be formed such that an open space is created in an upper part of the connection port connected to the return path.

According to the above-described aspect, even in case a sufficient space is absent around the side surface of the liquid tank, the supply path and the return path can be easily set by connecting them to the lower side of the liquid tank.

In the above-described aspect, the bottle cap may include an inner member having the supply port, the return port, and a sealing member for sealing a space between the inner member and the liquid bottle; and an annular shaped outer member that engages with the inner member on an inner side of the outer member and that is screwable to the liquid bottle.

By thus constituting the bottle cap, the liquid bottle can be easily replaced.

A second aspect of the present invention provided a measurement apparatus that supplies a testing substance to a substance to be tested fixed on a measurement chip, comprising: the liquid circulating apparatus according to the first aspect of the present invention, wherein due to the access of the access member, the liquid in the liquid tank is sucked and supplied to the measurement chip.

According to the above-described aspect, the liquid concentration in the liquid tank can be kept constant for precise measurements.

In the above-described aspect, the liquid may be used as a buffer solution.

The buffer solution is used more than the sample so that the buffer solution can be suitably used in the liquid circulating apparatus according to an aspect of the invention.

In the above-described aspect, the measurement apparatus may be a biosensor.

According to the above-described aspect, the liquid concentration in the liquid tank can be kept constant for precise measurements.

In the above-specified aspect, the measurement apparatus may be a surface plasmon sensor that measures interaction between protein and a sample by using surface plasmon resonance generated at a surface of a metal film.

According to the above-described aspect, the liquid concentration in the liquid tank can be kept constant for precise measurements.

Since an aspect of the present invention has the above-described configuration, it is possible to suppress the concentration variation of the liquid to be supplied.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The exemplary embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. A liquid circulating apparatus comprising:
a liquid bottle storing a liquid and having an inside of the liquid bottle sealed;
a liquid tank having an access port which can be accessed by an access member;
a supply path connected to the liquid bottle and the liquid tank, that allows the liquid to flow from the liquid bottle to the liquid tank;
a return path connected to the liquid bottle and the liquid tank, that allows the liquid to flow from the liquid tank to the liquid bottle; and
a liquid flow pump connected to either the supply path or the return path, that causes the liquid to flow,
wherein the liquid is circulated in a liquid circulating route that includes the liquid bottle, the liquid tank, the supply path and the return path.

2. The liquid circulating apparatus according to claim 1,
wherein the liquid tank has a closing cover that closes the access port when the access port is not accessed by the access member.

3. The liquid circulating apparatus according to claim 1 or 2, further comprising:
a dam member arranged in a flow path of the liquid tank closer to a side connected to the return path than to the access port, that dams the liquid in the liquid tank.

4. The liquid circulating apparatus according to claim 1 or 2,
wherein the liquid tank is provided with a connection port connected to the return path, and
wherein the connection port is arranged at such a height that the liquid in the liquid tank may not flow out to the connection port until the liquid reaches a predetermined level.

5. The liquid circulating apparatus according to any one of claims 1 to 4,
wherein the liquid bottle has a bottle cap that seals an inside of the liquid bottle, and
wherein the bottle cap has a supply port connected to the supply path and a return port connected to the return path, and the bottle cap is removably mounted at the liquid bottle.

6. The liquid circulating apparatus according to claim 2,
wherein the closing cover has substantially cross-shaped slits formed therein.

7. The liquid circulating apparatus according to claim 2,
wherein the closing cover is made of an elastically deformable resin.

8. The liquid circulating apparatus according to claim 3,
wherein the liquid tank is constituted such that a connection port connected to the supply path is formed in a lower surface of the liquid tank on a side of the supply path, and a connection port connected to the return path is formed in a lower surface of the liquid tank on a side of the return path, and
wherein the dam member is formed to extend the connection port connected to the return path.

9. The liquid circulating apparatus according to claim 3,
wherein the liquid tank is constituted such that a connection port connected to the supply path is formed in a lower surface of the liquid tank on a side of the supply path, and a connection port connected to the return path is formed in a lower surface of the liquid tank on a side of the return path, and
wherein the dam member is formed such that an open space is created in an upper part of the connection port connected to the return path.

10. The liquid circulating apparatus according to claim 5,
wherein the bottle cap includes an inner member having the supply port, the return port, and a sealing member for sealing a space between the inner member and the liquid bottle; and an annular shaped outer member that engages with the inner member on an inner side of the outer member and that is screwable to the liquid bottle.

11. A measurement apparatus that supplies a testing substance to a substance to be tested fixed on a measurement chip, comprising:
the liquid circulating apparatus according to claim 1,
wherein due to the access of the access member, the liquid in the liquid tank is sucked and supplied to the measurement chip.

12. The measurement apparatus according to claim 11,
wherein the liquid is used as a buffer solution.

13. The measurement apparatus according to claim 11 or 12,
wherein the measurement apparatus is a biosensor.

14. The measurement apparatus according to claim 11 or 12,
wherein the measurement apparatus is a surface plasmon sensor that measures interaction between protein and a sample by using surface plasmon resonance generated at a surface of a metal film.
